# EUROPÄISCHE PATENTSCHRIFT

(11) **EP 1 110 827 B1**
(45) Veröffentlichungstag und Bekanntmachung des Hinweises auf die Patenterteilung: **06.04.2005**
(21) Anmeldenummer: 00127284.8
(22) Anmeldetag: 19.12.2000
(51) Int. Cl.: B60R 22/28, B60R 22/34, F16F 7/12

(54) **Kraftbegrenzer für Gurtaufroller**
Load limiter for belt retractor
Limiteur de force pour rétracteur de sangle

(30) Priorität: 22.12.1999 DE 29922561 U
(43) Veröffentlichungstag der Anmeldung: 27.06.2001
(73) Patentinhaber: TRW Automotive GmbH, 73553 Alfdorf (DE)
(72) Erfinder: Huber, Andreas, 73547 Lorch (DE)
(74) Vertreter: Degwert, Hartmut, Dipl.-Phys.

(56) Entgegenhaltungen:
- EP-A- 0 878 365
- US-A- 5 618 006

## Beschreibung

Die Erfindung betrifft einen Kraftbegrenzer für Gurtaufroller mit einer drehbar in einem Rahmen gelagerten Gurtspule und einer drehfest mit der Gurtspule koppelbaren Trommel, auf der ein energieverzehrend plastisch deformierbares Metallband aufwickelbar ist, das durch mehrere schikanenartig am Rahmen angeordnete Umlenkelemente läuft und dabei deformiert wird.

Ein dem Oberbegriff des Anspruchs 1 bzw. des Anspruch 3 entsprechender Kraftbegrenzer ist aus der EP-A-0 878 365 bekannt.

Die Wirkungsweise eines solchen Kraftbegrenzers beruht darauf, daß bei einem Fahrzeugaufprall eine begrenzte Gurtspulendrehung in Abwickelrichtung zugelassen wird, wenn die Gurtkraft einen vorbestimmten Wert überschreitet, wobei das Metallband zwischen den Umlenkelementen durchgezogen und plastisch verformt wird. Das Niveau der Kraftbegrenzung wird durch die Steifigkeit des Metallbandes einerseits und die Geometrie der Anordnung der Umlenkelemente andererseits bestimmt. Es ist bereits vorgeschlagen worden, das Niveau der Kraftbegrenzung zur Anpassung an die Körperdaten des Insassen zwischen wenigstens zwei Werten umschaltbar auszulegen Die Umschaltung kann durch Bewegung wenigstens eines der Umlenkelemente erfolgen. Da die Bewegung des Umlenkelements gegen das Metallband erfolgt, sind hohe Stellkräfte erforderlich.

Durch die Erfindung wird ein Kraftbegrenzer für Gurtaufroller geschaffen, bei dem die Umschaltung von einem höheren auf ein niedriges Kraftniveau mit geringer Antriebsenergie erfolgen kann.

Gemäß einem ersten Lösungsvorschlag der Erfindung ist wenigstens eines der Umlenkelemente an einer rahmenfesten Stützstruktur abgestützt und quer zur Richtung der Stützkraft am Rahmen beweglich angeordnet sowie mit einer gestuften Anlagefläche für eine entsprechende gestufte Anschlagfläche der Stützstruktur versehen, die bei Eingriff der Stützstruktur in eine Stufe der Anlagefläche auch eine Bewegung des Umlenkelements in Richtung der Stützkraft zuläßt Die Bewegung des Umlenkelements erfolgt zunächst nur quer zur Richtung der Stützkraft, wobei nur Reibungskräfte überwunden werden müssen. Daher genügt für die Bewegung des Umlenkelements eine geringe Antriebskraft. Sobald die Stützstruktur dann in eine Stufe der Anlagefläche des Umlenkelements eingreift, wird das Umlenkelement unter der Wirkung der Stützkraft in seine dem niedrigeren Kraftniveau entsprechende Schaltstellung bewegt, bis es an der Anschlagfläche der Stützstruktur anstößt und dort sicher arretiert ist.

Gemäß dem zweiten Lösungsvorschlag der Erfindung ist wenigstens eines der Umlenkelemente an einer Stützstruktur abgestützt, die quer zur Richtung der Stützkraft am Rahmen beweglich geführt ist, und das Umlenkelement weist eine gestufte Anlagefläche für eine entsprechende gestufte Anschlagfläche der Stützstruktur auf, die bei Eingriff der Stützstruktur in eine Stufe der Anlagefläche eine Bewegung des Umlenkelements in Richtung der Stützkraft zuläßt. Bei dieser Ausführungsform der Erfindung wird zunächst die Stützstruktur quer zur Richtung der Stützkraft bewegt. Dabei müssen wiederum nur Reibungskräfte überwunden werden, so daß eine entsprechend niedrige Antriebskraft zur Bewegung der Stützstruktur ausreicht. Wenn anschließend die gestufte Anschlagfläche der Stützstruktur in eine Stufe der Anlagefläche des Umlenkelements eingreift, kann das Umlenkelement unter der Wirkung der Stützkraft ausweichen und in seine dem niedrigeren Kraftniveau entsprechende Schaltstellung bewegt werden, bis es an der Anschlagfläche der Stützstruktur anstößt und dort sicher arretiert wird.

Die Bewegung des Umlenkelements bei der ersten Ausführungsform bzw. der Stützstruktur bei der zweiten Ausführungsform quer zur Richtung der Stützkraft erfolgt vorzugsweise durch ein Stellglied. Ein solches Stellglied kann durch einen pyrotechnischen Kolben/Zylinder-Linearantrieb, durch einen Elektromagnet oder auch durch eine vorgespannte Feder gebildet sein.

Weitere Vorteile und Merkmale der Erfindung ergeben sich aus der folgenden Beschreibung mehrerer Ausführungsformen der Erfindung und aus den beigefügten Zeichnungen. In den Zeichnungen zeigen:
Figur 1 eine schematische Seitenansicht zur Erläuterung von Aufbau und Wirkungsweise des Kraftbegrenzers an einem Gurtaufroller;
Figur 2 eine vergrößerte Detailansicht aus Figur 1;
Figur 3 eine schematische Schnittansicht eines Stellgliedes für ein Umlenkelement in einer Ausgangsstellung;
Figur 4 eine der Figur 3 entsprechende Ansicht im umgeschalteten Zustand;
Figur 5 eine Ansicht analog Figur 3, jedoch bei einer zweiten Ausführungsform; und
Figur 6 eine der Figur 5 entsprechende Ansicht im umgeschalteten Zustand.

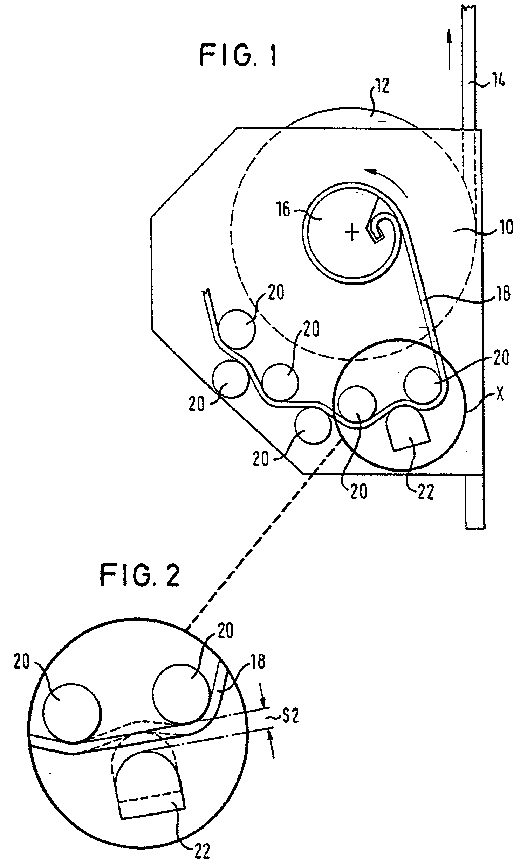

Der in Figur 1 gezeigte Gurtaufroller hat einen Rahmen 10, in dem eine Gurtspule 12 drehbar gelagert ist. Auf der Gurtspule 12 wird Gurtband 14 aufgewickelt. Die Gurtspule 12 ist mit einer Trommel 16 drehfest koppelbar, auf der ein Metallband 18 aufgewickelt ist. Das freie Ende des Metallbandes 18 ist durch mehrere schikanenartig am Rahmen 10 fest angeordnete Umlenkelemente 20 und ein am Rahmen 10 beweglich angeordnetes Umlenkelement 22 geführt. Die schikanenartig angeordneten Umlenkelemente 20, 22 bilden mit dem Metallband 18 und der an die Gurtspule 12 ankoppelbaren Trommel 16 einen Kraftbegrenzer. Bei einem Aufprallablauf wird die Trommel 16 mit der Gurtspule 12 drehfest gekoppelt. Wenn die Zugkraft im Gurtband 14 einen vorbestimmten Wert überschreitet, wird das Metallband 18 zwischen den Umlenkelementen 20, 22 durchgezogen, wobei es plastisch deformiert wird und Energiespitzen abbaut. Das Niveau der Kraftbegrenzung wird durch die Steifigkeit des Metallbandes 18 und die Geometrie der durch die Umlenkelemente 20, 22 gebildeten Schikane bestimmt. In Figur 1 ist das Umlenkelement 22 in einer Ausgangsstellung gezeigt, die einem höheren Kraftniveau der Kraftbegrenzung entspricht. Figur 2 zeigt das Umlenkelement 22 in einer Schaltstellung, die einem niedrigeren Kraftniveau entspricht, in welcher das Umlenkelement 22 von dem Metallband 18 zurückgewichen ist und sich um einen Abstand S2 von der Ausgangsstellung entfernt hat. Da nun an dem Umlenkelement 22 keine plastische Verformung des Metallbandes 18 geschieht, genügt eine geringere Zugkraft, um das Metallband 18 zwischen den übrigen Umlenkelementen 20 durchzuziehen.

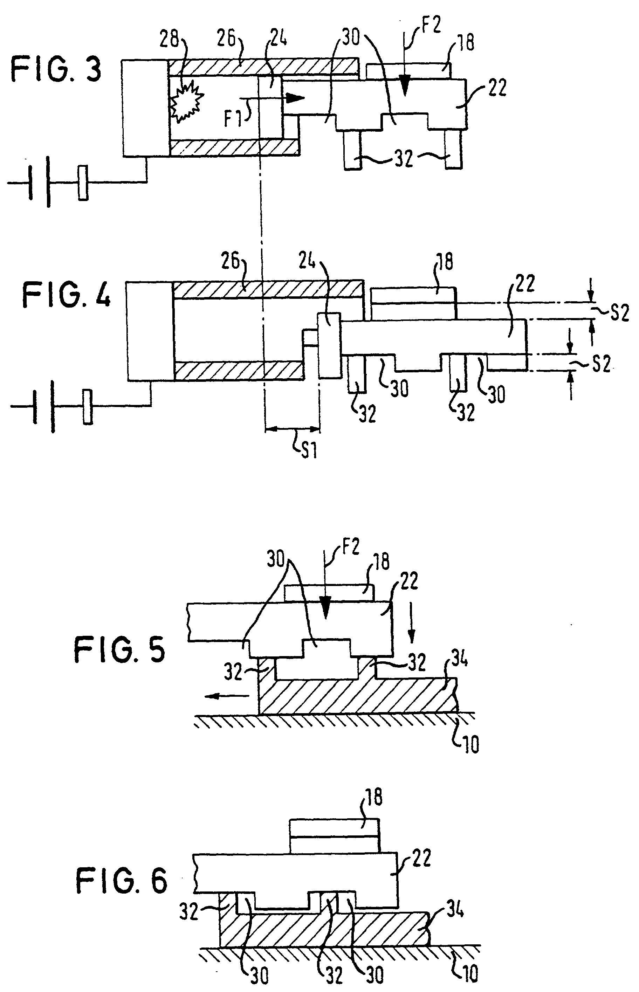

Bei der in Figur 3 gezeigten Ausführungsform ist das Umlenkelement 22 einstückig an einen Kolben 24 angeschlossen. Der Kolben 24 ist in einem Zylinder 26 aufgenommen, an dessen geschlossenem Boden eine pyrotechnische Ladung 28 angeordnet ist. Der Kolben 24 bildet mit dem Zylinder 26 und der pyrotechnischen Ladung 28 einen pyrotechnischen Kolben/Zylinder-Linearantrieb. Das Umlenkelement 22 hat auf seiner von dem Metallband 18 abgewandten Fläche eine gestufte Anlagefläche mit zwei Ausnehmungen 30. Eine am Rahmen fest angeordnete Stützstruktur mit zwei Stützelementen 32 bildet eine Anschlagfläche, auf der sich das Umlenkelement 22 mit seiner Anlagefläche abstützt. Bei der in Figur 3 gezeigten Ausgangsstellung, die auch in Figur 1 gezeigt ist, stützt sich das Umlenkelement 22 mit den den Ausnehmungen 30 benachbarten Stufen an den Stützelementen 32 ab. Der Kolben 24 ist in dieser Stellung im Zylinder 26 aufgenommen. Durch Aktivierung eines elektrischen Zünders wird die pyrotechnische Ladung 28 ausgelöst und erzeugt eine Kraft F1 die den Kolben 24 aus dem Zylinder 26 heraustreibt und dabei das Umlenkelement 22 in Richtung der Kraft F1 vorschiebt, die senkrecht zur Richtung der Stützkraft F2 ist, mit der sich das Metallband 18 an dem Umlenkelement 22 abstützt. Die Kraft F1 muß nur Reibungskräfte zwischen dem Metallband 18 und dem Umlenkelement 22 überwinden, so daß eine relativ geringe Antriebsleistung ausreicht. Durch diese Vorschubbewegung gelangt das Umlenkelement 22 in die in Figur 4 gezeigte Schaltstellung, die dem niedrigeren Kraftniveau entspricht, entsprechend der in Figur 2 dargestellten Situation. Die Stützelemente 32 der am Rahmen fest angeordneten Stützstruktur greifen nun in die Ausnehmungen 30 der gestuften Anlagefläche des Umlenkelements 22, so daß dieses von dem Metallband 18 zurückweichen kann und sich in Richtung der Stützkraft F2 bewegt, bis seine gestufte Anlagefläche an der Anschlagfläche der Stützelemente 32 anliegt. In dieser Stellung ist das Umlenkelement 22 durch Eingriff der Stützelemente 32 in die Ausnehmungen 30 arretiert.

Auf demselben Prinzip wie die in Figuren 3 und 4 gezeigte Ausführungsform beruht die Ausführungsform nach Figuren 5 und 6. Bei dieser Ausführungsform sind die Stützelemente 32 nicht am Rahmen fest angeordnet, sondern an einer am Rahmen beweglich gelagerten Stützstruktur 34 ausgebildet. Die Stützstruktur 34 wird durch einen Stellantrieb gesteuert, insbesondere durch einen pyrotechnischen Kolben/Zylinder-Linearantrieb wie in den Figuren 3 und 4. Das Umlenkelement 22 ist am Rahmen 10 des Gurtaufrollers nur in Richtung der Stützkraft F2 beweglich geführt. Auch bei dieser Ausführungsform muß das Stellglied zur Bewegung der Stützstruktur 34 nur Reibungskräfte überwinden, da die Bewegung der Stützelemente 32 senkrecht zur Richtung der Stützkraft F2 erfolgt.

Die Auslösung des Stellgliedes, das im Fall der Figuren 3 und 4 das Umlenkelement 22 antreibt und im Fall der Figuren 5 und 6 die Stützstruktur 34 bewegt, erfolgt durch eine Sensorik, die spezielle Körperdaten des Fahrzeuginsassen auswertet, insbesondere das Körpergewicht.

Da für die Bewegung des Umlenkelements 22 aus seiner Ausgangslage in die vorgeschobene Stellung nur Reibungskräfte zu überwinden sind und die Bewegung in Richtung der Stützkraft F2 über die Strecke S2 durch diese Stützkraft F2 zwangsweise erfolgt, wird für die Umschaltung des Kraftbegrenzers von einem höheren auf ein niedrigeres Kraftniveau nur eine geringe Stellkraft benötigt. Als Stellglied kommen daher neben der beschriebenen pyrotechnischen Ausführung zahlreiche Varianten in Betracht, insbesondere auch ein Elektromagnet, eine vorgespannte Feder als Kraftspeicher, ein hydraulisches oder auch ein pneumatisches Stellglied.

## Patentansprüche

1. Kraftbegrenzer für Gurtaufroller mit einer drehbar in einem Rahmen (10) gelagerten Gurtspule (12) und einer drehfest mit der Gurtspule (12) koppelbaren Trommel (16) auf der ein energieverzehrend plastisch deformierbares Metallband (18) aufwickelbar ist, das durch mehrere schikanenartig an Rahmen (10) angeordnete Umlenkelemente (20, 22) läuft und dabei deformiert wird wobei wenigstens eines der Umlenkelemente (20, 22) an einer rahmenfesten Stützstruktur (32) abgestützt und am Rahmen (10) beweglich angeordnet ist, **dadurch gekennzeichnet, daß** das wenigstens eine Umlenkelement (20,22) quer zur Richtung der Stützkraft am Rahmen (10) beweglich angeordnet ist, sowie mit einer gestuften Anlagefläche (30) für eine entsprechende gestufte Anschlagfläche der Stützstruktur (32) versehen ist, die bei Eingriff der Stützstruktur (32) in eine Stufe der Anlagefläche (30) auch eine Bewegung des Umlenkelements (22) in Richtung der Stützkraft zuläßt.

2. Kraftbegrenzer nach Anspruch 1, **dadurch gekennzeichnet, daß** das Umlenkelement (22) durch ein Stellglied quer zur Richtung der Stützkraft zwangsbewegbar ist.

3. Kraftbegrenzer für Gurtaufroller mit einer drehbar in einem Rahmen (10) gelagerten Gurtspule (12) und einer drehfest mit der Gurtspule koppelbaren Trommel (16) auf der ein energieverzehrend plastisch deformierbares Metallband (18) aufwickelbar ist, das durch mehrere schikanenartig an Rahmen (10) angeordnete Umlenkelemente (20, 22) läuft und dabei deformiert wird, **dadurch gekennzeichnet, daß** wenigstens eines der Umlenkelemente (20, 22) an einer Stützstruktur (34) abgestützt ist, die quer zur Richtung der Stützkraft am Rahmen beweglich geführt ist, und das Umlenkelement (22) eine gestufte Anlagefläche (30) für eine entsprechende gestufte Anschlagfläche (32) der Stützstruktur aufweist, die bei Eingriff der Stützstruktur in eine Stufe der Anlagefläche eine Bewegung des Umlenkelements (22) in Richtung der Stützkraft zuläßt.

4. Kraftbegrenzer nach Anspruch 3, **dadurch gekennzeichnet, daß** die Stützstruktur (34) durch ein Stellglied quer zur Richtung der Stützkraft zwangsbewegbar ist.

5. Kraftbegrenzer nach Anspruch 2 oder 4, **dadurch gekennzeichnet, daß** das Stellglied durch einen pyrotechnischen Kolben/Zylinder-Linearantrieb gebildet ist.

6. Kraftbegrenzer nach Anspruch 2 oder 4, **dadurch gekennzeichnet, daß** das Stellglied durch einen Elektromagnet gebildet ist.

7. Kraftbegrenzer nach Anspruch 2 oder 4, **dadurch gekennzeichnet, daß** das Stellglied eine vorgespannte Feder aufweist.

## Claims

1. A force limiter for a belt retractor comprising a belt reel (12) rotatably mounted in a frame (10) and a drum (16) which may be coupled to the belt reel (12) for joint rotation therewith and onto which a metal band (18) may be wound which is plastically deformable with dissipation of energy and runs through a plurality of deflection elements (20, 22) arranged on the frame (10) like baffles to be deformed thereby, at least one of the deflection elements (20, 22) being supported on a supporting structure (32) fixed to the frame and being movably arranged on the frame (10), **characterized in that** the at least one deflection element (20, 22) is arranged on the frame (10) so as to be movable transversely to the direction of the supporting force and is provided with a stepped contact surface (30) for a corresponding stepped abutment surface of the supporting structure (32) which upon engagement of the supporting structure (32) into a step of the contact surface (30) also permits a movement of the deflection element (22) in the direction of the supporting force.

2. The force limiter as set forth in claim 1, **characterized in that** the deflection element (22) is adapted to be moved in a constrained fashion by an actuator transversely to the direction of the supporting force.

3. A force limiter for a belt retractor comprising a belt reel (12) rotatably mounted in a frame (10) and a drum (16) which may be coupled to the belt reel for joint rotation therewith and onto which a metal band (18) may be wound which is plastically deformable with dissipation of energy and runs through a plurality of deflection elements (20, 22) arranged on the frame (10) like baffles to be deformed thereby, **characterized in that** at least one of the deflection elements (20, 22) is supported on a supporting structure (34) which is movably guided on the frame transversely to the direction of the supporting force, and the deflection element (22) has a stepped contact surface (30) for a corresponding stepped abutment surface (32) of the supporting structure which upon engagement of the supporting structure into a step of the contact surface permits a movement of the deflection element (22) in the direction of the supporting force.

4. The force limiter as set forth in claim 3, **characterized in that** the supporting structure (34) is adapted to be moved in a constrained fashion by an actuator transversely to the direction of the supporting force.

5. The force limiter as set forth in claim 2 or 4, **characterized in that** the actuator is formed by a pyrotechnic piston/cylinder linear drive.

6. The force limiter as set forth in claim 2 or 4, **characterized in that** the actuator is formed by a solenoid.

7. The force limiter as set forth in claim 2 or 4, **characterized in that** the actuator includes a preloaded spring.

## Revendications

1. Limiteur de force pour enrouleur de ceinture, comportant une bobine de ceinture (12) montée rotative dans un cadre (10) et un tambour (16) apte à être accouplé de manière solidaire en rotation avec la bobine de ceinture (12), sur lequel peut être enroulée une bande métallique (18) plastiquement déformable avec dissipation d'énergie, laquelle passe à travers plusieurs éléments de renvoi (20, 22) agencés sur le cadre à la manière de chicanes en étant déformée, au moins un des éléments de renvoi (20, 22) étant en appui sur une structure de soutien (32) solidaire du cadre et étant agencé mobile sur le cadre (10), **caractérisé en ce qu'**au moins un des éléments de renvoi (20, 22) est agencé mobile sur le cadre (10) transversalement à la direction de la force de soutien et est pourvu d'une surface d'appui (30) à gradins pour une surface de butée à gradins correspondante de la structure de soutien (32) qui, lors de l'engagement de la structure de soutien (32) dans un gradin de la surface d'appui (30), permet aussi un mouvement de l'élément de renvoi (22) en direction de la force de soutien.

2. Limiteur de force selon la revendication 1, **caractérisé en ce que** l'élément de renvoi (22) peut être déplacé de manière forcée par un organe d'actionnement transversalement à la direction de la force de soutien.

3. Limiteur de force pour enrouleur de ceinture, comportant une bobine de ceinture (12) montée rotative dans un cadre (10) et un tambour (16) apte à être accouplé de manière solidaire en rotation avec la bobine de ceinture (12), sur lequel peut être enroulée une bande métallique (18) plastiquement déformable avec dissipation d'énergie, laquelle passe à travers plusieurs éléments de renvoi (20, 22) agencés sur le cadre à la manière de chicanes en étant déformée, **caractérisé en ce qu'**au moins un des éléments de renvoi (20, 22) est en appui sur une structure de soutien (34) qui est guidée mobile sur le cadre (10) transversalement à la direction de la force de soutien, et **en ce que** l'élément de renvoi (22) présente une surface d'appui (30) à gradins pour une surface de butée (32) à gradins correspondante de la structure de soutien qui, lors de l'engagement de la structure de soutien dans un gradin de la surface d'appui, permet aussi un mouvement de l'élément de renvoi (22) en direction de la force de soutien.

4. Limiteur de force selon la revendication 3, **caractérisé en ce que** la structure de soutien (34) peut être déplacée de manière forcée par un organe d'actionnement transversalement à la direction de la force de soutien.

5. Limiteur de force selon la revendication 2 ou 4, **caractérisé en ce que** l'organe d'actionnement est formé par un entraînement linéaire à piston et cylindre pyrotechnique.

6. Limiteur de force selon la revendication 2 ou 4, **caractérisé en ce que** l'organe d'actionnement est formé par un électroaimant.

7. Limiteur de force selon la revendication 2 ou 4, **caractérisé en ce que** l'organe d'actionnement présente un ressort précontraint.
